# EUROPÄISCHE PATENTSCHRIFT

(11) **EP 0 996 507 B1**
(45) Veröffentlichungstag und Bekanntmachung des Hinweises auf die Patenterteilung: **26.03.2003**
(21) Anmeldenummer: 98943737.1
(22) Anmeldetag: 16.07.1998
(51) Int. Cl.: B05D 1/36, B05D 3/02

(54) **VERFAHREN ZUR HERSTELLUNG MEHRSCHICHTIGER ÜBERZÜGE**
METHOD FOR PRODUCING MULTILAYER COATINGS
PROCEDE DE PRODUCTION DE REVETEMENTS MULTICOUCHES

(30) Priorität: 18.07.1997 DE 19730890
(43) Veröffentlichungstag der Anmeldung: 03.05.2000
(73) Patentinhaber: BASF Coatings AG, 48165 Münster (DE)
(72) Erfinder: SAPPER, Ekkehard, D-97222 Rimpar (DE)
(74) Vertreter: Fitzner, Ulrich, Dr.
(86) Internationale Anmeldenummer: EP9804439
(87) Internationale Veröffentlichungsnummer: WO99003595

(56) Entgegenhaltungen:
- EP-A- 0 038 127
- DE-A- 3 825 278
- DE-A- 3 832 826
- DE-A- 3 922 363
- DE-A- 4 028 386
- DE-A- 4 216 613
- DE-A- 4 222 194
- DE-A- 4 339 870
- US-A- 4 268 542
- PATENT ABSTRACTS OF JAPAN vol. 097, no. 002, 28. Februar 1997 & JP 08 266995 A (MAZDA MOTOR CORP), 15. Oktober 1996

## Beschreibung

### Gebiet der Erfindung

Die Erfindung betrifft ein Verfahren zur Herstellung eines mehrschichtigen Überzugs auf einer Substratoberfläche durch sukzessives Aufbringen eines wäßrigen Basislacks und eines wäßrigen Decklacks sowie das gemeinsame Einbrennen der Basislackschicht und der Decklackschicht, wobei der wäßrige Basislack mit hydroxylgruppenhaltigen Emulgatoren emulgierte hydrophobierte Aminoplastharze enthält.

### Stand der Technik

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren übereinander angeordneten Überzugsschichten zu versehen.
Mehrschichtlackierungen werden bevorzugt nach dem sogenannten "Basecoat/Clearcoat"-Verfahren aufgebracht, das heißt es wird ein pigmentierter Basislack vorlackiert und nach kurzer Ablüftzeit ohne Einbrennschritt (naß-in-naß-Verfahren) mit einem Klarlack überlackiert. Anschließend werden Basislack und Klarlack zusammen eingebrannt. Besonders große Bedeutung hat das "Basecoat/Clearcoat"-Verfahren bei der Applikation von Automobildecklacken, inbesondere bei Metalleffektlacken, erlangt.

Wirtschaftliche und ökologische Gründe haben dazu geführt, daß versucht wurde, bei der Herstellung von Mehrschichtüberzügen wäßrige Basislacke einzusetzen.
Die Beschichtungszusammensetzungen zur Herstellung dieser Basislackschichten müssen nach dem heute üblichen rationellen "naß-innaß"-Verfahren verarbeitbar sein, das heißt sie müssen nach einer kurzen Vortrocknungszeit ohne Einbrennschritt mit einer transparenten Deckschicht überlackiert werden, ohne störende Anlöseerscheinungen und "strike-in"-Phänomene zu zeigen.

In DE-A-40 28 386 wird ein Verfahren zur Herstellung eines mehrschichtigen Überzugs auf einer Substratoberfläche beschrieben, bei welchem (1) als Basislack ein wasserverdünnbarer Basislack aufgebracht wird, der Wasser, gegebenenfalls organische Lösemittel, ein wasserverdünnbares Bindemittel, Pigmentteilchen und ein Polyamid als Rheologiehilfsmittel enthält, (2) aus der in Stufe (1) aufgebrachten Zusammensetzung ein Polymerfilm auf der Oberfläche gebildet wird, (3) auf der so erhaltenen Basislackschicht ein geeigneter transparenter Decklack aufgebracht wird und anschließend (4) die Basislackschicht zusammen mit der Decklackschicht eingebrannt wird. Als Decklacke können konventionelle lösemittelhaltige Klarlacke, wasserverdünnbare Klarlacke oder Pulverklarlacke eingesetzt werden.

DE-A-42 16 613 umfaßt ein Verfahren zur Herstellung einer zweischichtigen Lackierung auf einer Substratoberfläche, bei dem (1) ein pigmentierter wäßriger Basislack, der ein wasserverdünnbares (Meth)acrylat-Emulsionspolymerisat, das in Gegenwart spezifischer Emulgatoren hergestellt wird, als Bindemittel enthält, auf die Substratoberfläche aufgebracht wird, (2) aus dem in Stufe (1) aufgebrachten Basislack ein Polymerfilm gebildet wird, (3) auf der so erhaltenen Schicht ein transparenter Decklack aufgebracht wird und anschließend Basislackschicht und Decklackschicht gemeinsam eingebrannt werden. Als Decklacke können wiederum konventionelle lösemittelhaltige Klarlacke, wäßrige Klarlacke oder Pulverklarlacke eingesetzt werden.

Bei der Verwendung wäßriger Basislacke, beispielsweise gemäß DE-A-40 28 386 oder DE-A-42 16 613, und gleichzeitiger Verwendung wäßriger Decklacke im "Basecoat/Clearcoat"-Verfahren ("naß-in-naß"-Verfahren) kommt es, insbesondere beim Einsatz von wäßrigen Pulverklarlackslurries als Decklack, zu großen Problemen, indem die nur kurz vorgetrockneten Wasserbasislackfilme bei der Beschichtung mit dem wäßrigen Decklack diesem Wasser entziehen und selbst wieder angelöst werden. Infolge der Anlösung des Wasserbasislackfilms und der damit verbundenen Erweichung des Films, sowie infolge des Entzugs von Wasser aus dem trocknenden wäßrigen Decklack kommt es beim Vortrocknen und Einbrennen des Aufbaus aus Basis- und Decklack zu Rissen über die gesamte Fläche - eine Erscheinung, die auch unter dem Begriff "mud-cracking" bekannt ist. Weiterhin hochproblematisch ist die Neigung von wäßrigen Basislacken zu Kochern beim Einbrennen.

DE-A-42 22 194 beschreibt ein Verfahren zur Herstellung von Zweischichtlackierungen auf einer Substratoberfläche, bei dem (1) ein pigmentierter Basislack auf Lösemittel- oder Wasserbasis auf die Substratoberfläche aufgebracht wird, (2) aus dem in Stufe (1) aufgebrachten Lack ein Polymerfilm gebildet wird, (3) auf die so erhaltene Basislackschicht als Decklack ein Pulverklarlack aufgebracht wird, der ein epoxidgruppenhaltiges Polyacrylatharz als Bindemittel enthält und anschließend (4) die Basislackschicht zusammen mit der Pulverklarlackschicht eingebrannt wird.
Grundsätzlich problematisch bei DE-A-42 22 194 ist die Notwendigkeit unterschiedlicher Applikationsverfahren für den Basislack, der im allgemeinen durch Spritzen oder Tauchen appliziert wird, und für den Pulverklarlack, der im allgemeinen mittels elektrostatischer Techniken appliziert wird. Weiterhin sind in DE-A-42 22 194 lösemittelhaltige Basislacke zugelassen, was wiederum aus ökologischer Sicht bedenklich ist.

### Aufgabe und Lösung

Aufgabe der vorliegenden Erfindung war es also, geeignete Basisbeschichtungsmittel aufzufinden, mit welchen Verfahren zur Mehrschichtlackierung nach dem sogenannten "Basecoat/Clearcoat"-Verfahren mittels "naß-in-naß"-Technik, bei dem sowohl Basis- als auch Decklack wäßrige Systeme sind und die mit demselben Applikationsverfahren auf das Substrat aufgebracht werden können, solchermaßen durchgeführt werden können, daß die Anlösung des Wasserbasislackfilms und die damit verbundene Erweichung des Films durch den wäßrigen Decklack eine untergeordnete Rolle spielen und daß keine Risse im Aufbau aus Basis- und Decklack ("mud-cracking") beim Vortrocknen und/oder beim Einbrennen auftreten, sowie daß insbesondere die Neigung zu Kochern in der Basislackschicht beim Einbrennschritt reduziert wird.

Diese Aufgabe wird durch das erfindungsgemäße Verfahren zur Herstellung eines mehrschichtigen, schützenden und/oder dekorativen Überzugs auf einer Substratoberfläche gelöst, welches folgende Schritte umfaßt:
(1): Aufbringen eines wäßrigen Basislacks A auf die Substratoberfläche,
(2): Ausbildung eines Polymerfilms aus dem in Stufe (1) aufgebrachten wäßrigen Basislack A,
(3): Aufbringen eines wäßrigen transparenten Decklacks B auf die gemäß Stufe (2) erhaltene Basislackschicht und abschließend
(4): Gemeinsames Einbrennen der Basislackschicht und der Decklackschicht,
dadurch gekennzeichnet, daß der wäßrige Basislack A mindestens ein hydroxylgruppenhaltiges Bindemittel in wäßriger Lösung oder Dispersion und eine mit einem hydroxylgruppenhaltigen Emulgator hergestellte stabile wäßrige Dispersion eines hydrophobierten Aminoplastharzes enthält.

In einer bevorzugten Ausführungsform der Erfindung ist der hydroxylgruppenhaltige Emulgator für das hydrophobe Aminoplastharz, welches vorzugsweise ein Melamin-Formaldehyd-Kondensationsprodukt ist, das mit C3- bis C12-Alkoholen verethert ist, ein oligomeres und/oder polymeres Di- und/oder Polyol mit emulgierender Wirkung, besonders bevorzugt ein Di- und/oder Polyol aus der Gruppe der Polyacrylatdiund/oder -polyole, der Polyesterdi- und/oder -polyole und der Polyetherdiund/oder -polyole, sowie ganz besonders bevorzugt aus der Gruppe der Polyurethandi- und/oder -polyole und Polycarbonatdi- und/oder -polole.

Vorzugsweise ist das hydroxylgruppenhaltige Bindemittel im Basislack A ausgewählt aus der Gruppe der Polyacrylate, Polyurethane, Polyester, Polyether, Alkydharze und/oder Gellulosederivate.

In einer weiteren bevorzugten Ausführungsform der Erfindung ist der wäßrige Decklack B ein wäßriger Einkomponenten- und/oder Zweikomponenten-Klarlack oder besonders bevorzugt ein Pulverslurry-Klarlack.

### Durchführung der Erfindung

### Der Basislack A

Erfindungsgemäß enthält der Basislack A als Vernetzungsmittel hydrophobierte Aminoplastharze, die mittels hydroxylgruppenhaltiger Emulgatoren stabil in der wäßrigen Phase emulgiert sind.
Bei den an sich bekannten hydrophoben Aminoplastharzen handelt es sich bevorzugt um Kondensationsprodukte aus Aldehyden, insbesondere Formaldehyd, und beispielsweise Harnstoff, Guanamin, Benzoguanamin, sowie vorzugsweise Melamin.
Die hydrophoben Aminoplastharze enthalten Alkoholgruppen, vorzugsweise Methylolgruppen, welche bevorzugt mit C3- bis C12-Alkoholen, wie beispielweise Isopropanol, n-Butanol, Isobutanol, tert.-Butanol, Amylalkohol, 1-Hexanol, 1-Octanol, 2-Ethylhexanol, 1-Decanol, Isodecanol, 1-Dodecanol oder Isododecanol, verethert sind.
Als hydrophobe Aminoplastharze werden insbesondere mit Butanol veretherte Melamin-Formaldehydharze eingesetzt.

Als hydroxylgruppenhaltige Emulgatoren für die hydrophoben Aminoplastharze werden vorzugsweise Di- und /oder Polyole mit emulgierenden Eigenschaften eingesetzt, besonders bevorzugt Diund/oder Polyole mit einem Molekulargewicht zwischen 500 und 50.000 Dalton, ganz besonders bevorzugt mit einem Molekulargewicht zwischen 500 und 5000 Dalton.
Vorzugsweise werden die emulgierenden Di- und/oder Polyole aus der Gruppe der Polyacrylatdi- und/oder Polyole, Polyesterdi- und/oder -polyole und Polyetherdi- und/oder -polyole, sowie ganz besonders bevorzugt aus der Gruppe der Polyurethandi- und/oder -polyole und der Polycarbonatdi- und/oder -polyole ausgewählt.
Das Verhältnis von hydrophilen zu hydrophoben Anteilen in den Diund/oder Polyolen wird vorzugsweise entweder über das Molekulargewicht der Di- und/oder Polyole und den Anteil schon vorhandener hydrophiler Gruppen im Di- und/oder Polyol oder durch die Einführung zusätzlicher hydrophiler Gruppen, wie beispielsweise Säuregruppen oder deren Salze, z.B. Carboxyl- oder Carboxylatgruppen, Sulfonsäure- oder Sulfonatgruppen sowie Phosphonsäure- oder Phosphonatgruppen, eingestellt.

Als weitere Vernetzungsmittel können im Basislack A alle für die Vernetzung von hydroxylgruppenhaltigen Bindemitteln geeigneten Vernetzungsmittel enthalten sein.
Bevorzugt als weitere Vernetzungsmittel sind blockierte und/oder unblockierte Polyisocyanate, deren Isocyanatgruppen vorzugsweise an aliphatische oder cycloaliphatische Reste gebunden sind.
Beispiele für derartige Polyisocyanate sind Hexamethylendiisocyanat, Isophorondiisocyanat, Trimethylhexamethylendiisocyanat, Dicyclohexylmethandiisocyanat, 1,3-Bis-(2-lsocyanatopropyl-2-)benzol, sowie Addukte dieser Polyisocyanate an Polyole, insbesondere niedermolekulare Polyole, wie beispielsweise Trimethylolpropan, sowie von diesen Polyisocyanaten abgeleitete isocyanuratgruppen- und/oder biuretgruppenhaltige Polyisocyanate, die vorzugsweise mehr als zwei Isocyanatgruppen im Molekül enthalten.
Zur Blockierung der Polyisocyanate können an sich alle dem Fachmann bekannten Blockierungsmittel mit einer ausreichend tiefen Deblockierungstemperatur eingesetzt werden.

Als hydroxylgruppenhaltige Bindemittel werden in den Basislacken A vorzugsweise wäßrige Dispersionen bevorzugt hydroxylgruppenhaltiger Polyacrylate, Polyurethane, Polyester, Polyether, Alkydharze und/oder Cellulosederivate eingesetzt.
Geeignete wäßrige Bindemittel auf der Basis von hydroxylgruppenhaltigen Polyacrylaten sind beispielsweise in der DE-A-38 32 826 beschrieben, die ein zweistufiges Herstellverfahren für wasserverdünnbare Polyacrylate, die für den Einsatz in Basislacken geeignet sind, offenbart.
Hydroxylgruppenhaltige Polyurethane für wäßrige Basislacke A werden beispielsweise in DE-A-38 25 278 offenbart, wobei die Polyurethane aus einer Mischung aus Polyether- und Polyesterdiolen, Diisocyanaten und Verbindungen mit mindestens zwei gegenüber Isocyanatgruppen reaktiven Gruppen und mit einer zur Anionenbildung befähigten Gruppe zu einem Zwischenprodukt umgesetzt werden, das anschließend mit mindestens drei Hydroxylgruppen enthaltenden Polyolen umgesetzt wird.
Als Bindemittel für wäßrige Basislacke A geeignete hydroxylgruppenhaltige Polyester und/oder Polyether, wie sie auch als Präpolymere bei der Synthese der hydroxylgruppenhaltigen Polyurethane eingesetzt werden können, sind ebenfalls im Stand der Technik beschrieben.
Die Verwendung von Alkydharzen und Cellulosederivaten als Bindemittelbestandteile in wäßrigen Basislacken ist beispielsweise in DE-A-39 22 363 offenbart.
Als Bindemittel bevorzugt sind acrylierte Polyurethanharze, die beispielsweise gemäß DE-A-43 39 870 erhältlich sind, indem in einer wäßrigen Dispersion eines Polyurethanharzes ein ethylenisch ungesättigtes Monomer oder ein Gemisch ethylenisch ungesättigter Monomeren radikalisch polymerisiert werden, wobei das Gewichtsverhältnis zwischen dem Polyurethanharz und dem ethylenisch ungesättigten Monomeren zwischen 1:10 und 10:1 liegt.

Die erfindungsgemäß eingesetzten Basislacke A können neben den oben beschriebenen hydroxylgruppenhaltigen Bindemitteln in Anteilen von bis zu 75 Gew.-%, bezogen auf das Bindemittel, weitere Bindemittelbestandteile mit geringen Hydroxylgruppengehalten oder frei von Hydroxylgruppen enthalten, wie beispielsweise wasserverdünnbare Polyesterharze, wasserverdünnbare Polyacrylatharze, wasserverdünnbare Polyurethanharze, wasserverdünnbare Alkydharze, wasserverdünnbare Cellulosederivate sowie wasserverdünnbare Polyetherharze.

Gegebenenfalls enthalten die Basislacke A als Pigmente in Anteilen von bis zu 30 Gew.-%, vorzugsweise zwischen 5 und 25 Gew.-%, bezogen auf den Festkörpergehalt des Basislacks, alle für wäßrige Lacke geeigneten anorganischen oder organischen Pigmente oder Mischungen aus solchen Pigmenten. Als Beispiele für einsetzbare Pigmente seien Titandioxid, Eisenoxid, Ruß, Metallpigmente, insbesondere Aluminiumpigmente, und Perlglanz- bzw. Interferenzpigmente genannt.
Bevorzugt enthalten die Basislacke A Metallpigmente, insbesondere Aluminiumpigmente, allein oder in Kombination mit nichtmetallischen Pigmenten.
Ferner können Korrosionsschutzpigmente, wie beispielsweise Zinkphosphat, enthalten sein.

Zusätzlich kann der Basislack A auch an sich bekannte und für Lacke übliche Füllstoffe enthalten, wie beispielsweise Kieselsäure, Magnesiumsilikat, Titandioxid und Bariumsulfat.

Außerdem können die erfindungsgemäßen Basislacke A vernetzte polymere Mikroteilchen (vergleiche beispielsweise EP-A-0 038 127) und/oder übliche rheologiesteuernde anorganische oder organische Additive enthalten. Als Verdicker wirken beispielsweise Schichtsilikate oder wasserlösliche Celluloseether sowie synthetische Polymere mit ionischen oder assoziativ wirken Gruppen, wie Polyvinylalkohol, Polyamide, Poly(meth)acrylamid, Poly(meth)acrylsäure, Polyvinylpyrrolidon oder hydrophob modifizierte ethoxylierte Urethane oder Polyacrylate.

Weiterhin können die Basislacke A organische Lösemittel in Mengen von bis zu 15 Gew.-% enthalten. Als organische Lösemittel sind beispielsweise Naphthaline, Benzine oder Alkohole, vorzugsweise niedermolekulare Diole, wie z.B. Alkylenglykole oder Dimethylolcyclohexan, geeignet.

Als weitere Komponente können die Basislacke A Filmbildehilfsmittel enthalten, wie beispielsweise Dicarbonsäuredialkylester oder hochsiedende Benzine oder Naphthaline, die einen Siedepunkt von über 100 Grad C, vorzugsweise über 140 Grad C, aufweisen.

Die erfindungsgemäßen Basislacke A enthalten gegebenenfalls noch weitere Hilfsmittel und/oder Additive, wie beispielweise Katalysatoren für die Vernetzungsreaktion, Entschäumungsmittel, Dispersionshilfsmittel, Netzmittel, vorzugsweise carboxyfunktionelle Dispergiermittel, die sich von den oben genannten Emulgatoren unterscheiden, Antioxidantien, UV-Absorber, Radikalfänger, Verlaufshilfsmittel und/oder Biozide.

### Der Decklack B und das erfindungsgemäße Verfahren

Als Decklacke B können alle für die Herstellung von Zweischichtlackierungen geeigneten wäßrigen Decklacke eingesetzt werden. Bevorzugt sind die Decklacke B wäßrige Klarlacke oder wäßrige Lacke, die transparente Pigmente enthalten. Die wäßrigen Klarlacke B können Einkomponenten- oder Zweikomponenten-Klarlacke sein, wobei Pulverslurry-Klarlacke besonders bevorzugt sind.
Beispielhaft für geeignete Decklacke B seien wäßrige Decklacke gemäß DE-A-38 32 826 mit hydroxylgruppenhaltigen wasserverdünnbaren Polyacrylatharzen als Bindemittel und konventionellen Aminoplastharzen als Vernetzungsmittel (Zweikomponenten-Klarlack) genannt.
Die als Decklacke B besonders bevorzugten Pulverslurry-Klarlacke bestehen vorzugsweise aus einer pulverförmigen Komponente, enthaltend mindestens ein Bindemittel, vorzugsweise ein Vernetzungsmittel und gegebenenfalls Katalysatoren für die Vemetzungsreaktion sowie pulverlacktypische Hilfsstoffe und Additive, wie beispielsweise Entgasungsmittel, Verlaufsmittel, UV-Absorber, Radikalfänger oder Antioxidantien, und aus einer wäßrigen Dispersion als Mischkomponente, enthaltend ein Verdickungsmittel und gegebenenfalls Dispergiermittel, geringe Mengen an Lösemittel, Biozide und weitere Hilfsstoffe, wie beispielsweise Netzmittel, Entschäumungsmittel, sowie zusätzliche Verlaufsmittel, UV-Absorber, Radikalfänger oder Antioxiantien.
Solche Pulverslurry-Klarlacke sind beispielsweise in US-PS 4,268,542 beschrieben.

Das Verfahren zum Aufbringen mehrschichtiger Überzüge unter Verwendung der erfindungsgemäßen Basislacke gliedert sich in folgende Stufen:
1): Aufbringen eines wäßrigen Basislacks A auf die Substratoberfläche,
(2): Ausbildung eines Polymerfilms aus dem in Stufe (1) aufgebrachten wäßrigen Basislack A,
(3): Aufbringen eines wäßrigen transparenten Decklacks B auf die gemäß Stufe (2) erhaltene Basislackschicht und abschließend
(4): Gemeinsames Einbrennen der Basislackschicht und der Decklackschicht.

Die in Stufe (1) aufgebrachte Basislackschicht wird zur Ausbildung des Polymerfilms gemäß Stufe (2) vor dem Auftrag des transparenten Decklacks B in Stufe (3) vorzugsweise bei erhöhter Temperatur abdunsten lassen, wobei der Zeitraum des Abdunstens von der Temperatur abhängt und über weite Bereiche einstellbar ist. So werden beispielsweise bei Temperaturen von 60 bis 100 Grad C, vorzugsweise 70 bis 85 Grad C, Abdunstzeiten zwischen 1 bis 15 Minuten, vorzugsweise 4 bis 10 Minuten, gewählt.
Der Basislack A und der Decklack B werden nach üblichen im Stand der Technik bekannten Verfahren aufgetragen. Die Trockenfilmdicke der Basislackschicht liegt zwischen 10 und 40 µm, vorzugsweise zwischen 12 und 25µm, die Trockenfilmdicke der Decklackschicht zwischen 20 und 60 µm, vorzugsweise zwischen 35 und 45µm. Nach Aufbringen des Decklacks B in Stufe (3) und vor dem Einbrennschritt in Stufe (4) werden die Basislackschicht und die Decklackschicht vorzugsweise bei Raumtemperatur während eines Zeitraums von 2 bis 10 Minuten, vorzugsweise von 4 bis 6 Minuten, getrocknet.
Das Einbrennen der Basislack- und der Decklackschicht in Stufe erfolgt in geeigneten und aus dem Stand der Technik bekannten Vorrichtungen, bevorzugt bei Temperaturen zwischen 120 und 160 Grad C, besonders bevorzugt zwischen 130 und 150 Grad C, während eines Zeitraums von bevorzugt 10 bis 40 Minuten, besonders bevorzugt von 15 bis 30 Minuten.

Ein weiterer Gegenstand der vorliegenden Erfindung ist ein mehrschichtig beschichtetes Substrat, wobei der Überzug auf die Substratoberfläche aufgebracht wird, indem
(1): ein wäßriger Basislacks A auf die Substratoberfläche aufgebracht wird,
(2): zur Ausbildung eines Polymerfilms aus dem in Stufe (1) aufgebrachten Basislack A dieser abdunsten lassen wird,
(3): hiernach ein wäßriger transparenter Decklack B auf die gemäß Stufe (2) erhaltene Basislackschicht aufgebracht wird und abschließend
(4): die Basislackschicht und die Decklackschicht gemeinsam eingebrannt werden,
dadurch gekennzeichnet, daß der Basislack A mindestens ein hydroxylgruppenhaltiges Bindemittel in wäßriger Lösung oder Dispersion und eine mit einem hydroxylgruppenhaltigen Emulgator hergestellte stabile wäßrige Dispersion eines hydrophobierten Aminoplastharzes enthält.

Als zu beschichtende Substrate kommen vor allem vorbehandelte Metallsubstrate in Frage; es können aber auch nicht vorbehandelte Metalle oder beliebige andere Substrate, wie beispielsweise Holz oder Kunststoffe, unter Verwendung der erfindungsgemäßen Basislacke mit einer mehrschichtigen schützenden und/oder dekorativen Beschichtung überzogen werden.

Die Erfindung wird anhand der folgenden Beispiele erläutert. Alle Angaben über Teile und Prozentsätze sind Gewichtsangaben, falls nicht ausdrücklich anders bezeichnet.

### Beispiele:

### Beispiel 1: Herstellung eines erfindungsgemäßen wäßrigen Basislacks A1

In einem Reaktionsgefäß mit Rührer, Innenthermometer, Rückflußkühler und elektrischer Heizung werden 237,4g eines linearen Polyesters (aufgebaut aus dimerisierter Fettsäure (Pripol® 1013), Isophthalsäure und Hexandiol-1,69 mit einer Hydroxylzahl von 80 mg KOH/g und einem zahlenmittleren Molekulargewicht von 1400 nach Zusatz von 20,2g Dimethylolpropionsäure und 7,2g Trimethylolpropanmonoallylether in 43,3g N-Methylpyrrolidon und 144,4g Methylethylkeon gelöst. danach werden bei 45 Grad C 88,1g Isophorondiisocyanat zugegeben. Nach Abklingen der exothermen Reaktion wird langsam auf 80 Grad C erwärmt. es wird bei dieser temperatur gehalten bis der NCO-Gehalt 1,8% beträgt. Dann werden nach Abkühlen auf 50 Grad C schnell hintereinander 14,4g Triethylamin und 538,5g deionisiertes Wasser zugegeben. Nach 15 Minuten wird dem gut dispergierten Harz ein Gemisch aus 7,3g Aminoethylethanolamin und 29,1g deionisiertem Wasser zugesetzt. Anschließend wird die Temperatur auf 60 Grad C erhöht und das Methylethylketon im Vakuum abdestilliert.
Die so erhaltene Dispersion weist einen Feststoffgehalt von ca. 35% und einen pH-Wert von ca. 8,0 auf.
463,2g der oben hergestellten Polyurethanharzdispersion werden mit 263,7g deionisiertem Wasser verdünnt. Nach Erwärmen auf 85 Grad C wird ein Gemisch aus 50,1g Styrol, 50,1g Methylmethacrylat, 37,5g n-Butylacrylat und 37,5g Hydroxylethylmethacrylat innerhalb von 3,5 Stunden langsam zugegeben. Mit Beginn der Zugabe dieser Mischung wird eine Lösung von 2,6g t-Butylperethylhexanoat in 35g Methoxypropanol innerhalb von 4 stunden zugegeben. Anschließend wird so lange bei 85 Grad C gehalten bis die Monomeren vollständig abreagiert sind. Gegebenenfalls wird Initiator nachgegeben. Schließlich wird gegebenenfalls angefallenes Koagulat abfiltriert.

220g der solchenmaßen hergestellten Dispersion des acrylierten Polyurethanharzes werden unter Rühren mit den folgenden weiteren Lackkomponenten gemischt:

| | |
|---|---|
| 94,1g | deionisiertes Wasser |
| 160,0g | Polyacrylat-Dispersion Acronal® 290 der Fa. BASF AG als weiteres Bindemittel |
| 1,0g | Ammoniak |
| 220,0g | Laponite® als Verdickungsmittel |
| 115,0g | Aerosilpaste® 805 |
| 40,0g | Aerosilpaste® 972 |
| 26,0g | Lösung eines handelsüblichen Netzmittels |
| 90,0g | einer 3%igen Lösung von Viscalex® HV30 in Wasser als Verdicker |
| 84,5g | Irgazin®-Rot DPP BO (Pigment) |
| 26,5g | Hostaperm®-Rosa E (Pigment) |
| 4,3g | Bayferrox® 130 BM (Pigment) |
| 37,0g | Novoperm®-Orange (Pigment) |
| 6,2g | Titan Rutil (Pigment) |

sowie

| | |
|---|---|
| 55,4g | einer wäßrigen Dispersion, die gebildet wird durch Mischen von: |
| 361,5g | Melaminharz Cymel® 1133 |
| 10,2g | Polyol-Emulgator Pluronic® PE 9400 und |
| 128,3g | einer Pufferlösung, hergestellt durch Mischen von 1,47g Triethanolamin, 0,45g Ameisensäure und 126,4g deionisiertes Wasser. |

### Beispiel 2: Herstellung eines erfindungsgemäßen wäßrigen Basislacks A2

Der Basislack A2 wird analog Beispiel 1 hergestellt, mit dem Unterschied, daß Melaminharz-Komponente Resimene® X755 eingesetzt wird.

### Beispiel 3: Herstellung eines erfindungsgemäßen wäßrigen Basislacks A3

Der Basislack A3 wird analog Beispiel 1 hergestellt, mit dem Unterschied, daß Melaminharz-Komponente Luwipal® 8792 eingesetzt wird.

### Beispiel4: Herstellung eines wäßrigen Basislacks AV1

Der Basislack AV1 gemäß Vergleichsbeispiel wird analog Beispiel 1 hergestellt, mit dem Unterschied, daß als Melaminharz-Komponente 40,0g Cymel® 1133 ohne Emutgator gemeinsam mit zusätzlich 19,5g deionisiertem Wasser eingesetzt werden.

### Beispiel 5: Herstellung einer Zweischichtlackierung unter Verwendung der erfindungsgemäßen Basislacke A1 bis A3 bzw. des Vergleichsbeispiels AV1

Die gemäß den Beispielen 1 bis 4 hergestellten Basislacke werden mit einer Fließbecherpistole auf ein mit einem handelsüblichen Elektrotauchlack und mit einem handelsüblichen Füller lackiertes Karosserieblech so aufgebracht, daß der 5 Minuten bei 20 Grad C und 10 Miuten bei 80 Grad C getrocknete Basislackfilm eine Trockenfilmdicke von etwa 15µm aufweist. Auf den solchermaßen getrockneten Basislackfilm wird ein wäßriger Pulverslurry-Klarlack überlackiert und 30 Minuten bei 130 Grad C eingebrannt. Die Kochergrenzen, Mud-Cracking-Grenzen und Appearance-Messungen sind in der folgenden Tabelle angeführt:

| **Test/Basislacke** | **A1** | **A2** | **A3** | **AV1** |
|---|---|---|---|---|
| **Kochergrenze µm** | 47 | 48 | 50 | 35 |
| **Mud-Cracking-Grenze µm** | 48 | 49 | 50 | 48 |

| **Appearance** | | | | |
|---|---|---|---|---|
| **Longwave** | 12 | 10 | 10 | 11 |
| **Shortwave** | 23 | 22 | 23 | 22 |

## Patentansprüche

1. Verfahren zum Aufbringen eines mehrschichtigen Überzugs auf einer Substratoberfläche, umfassend folgende Schritte:
(1): Aufbringen eines wäßrigen Basislacks A auf die Substratoberfläche,
(2): Ausbildung eines Polymerfilms aus dem in Stufe (1) aufgebrachten wäßrigen Basislack A,
(3): Aufbringen eines wäßrigen transparenten Decklacks B auf die gemäß Stufe (2) erhaltene Basislackschicht und abschließend
(4): Gemeinsames Einbrennen der Basislackschicht und der Decklackschicht,
**dadurch gekennzeichnet, daß** der wäßrige Basislack A mindestens ein hydroxylgruppenhaltiges Bindemittel in wäßriger Lösung oder Dispersion und eine mit einem hydroxylgruppenhaltigen Emulgator hergestellte stabile wäßrige Dispersion eines hydrophobierten Aminoplastharzes enthält.

2. Verfahren nach Anspruch 1,
**dadurch gekennzeichnet, daß** der hydroxylgruppenhaltige Emulgator ein Diund/oder Polyol ist.

3. Verfahren nach Anspruch 2,
**dadurch gekennzeichnet, daß** der hydroxylgruppenhaltige Emulgator ein Diund/oder Polyol mit einem Molekulargewicht von mindestens 500 Dalton ist.

4. Verfahren nach Anspruch 2 oder 3,
**dadurch gekennzeichnet daß** das Di- und/oder Polyol ausgewählt ist aus der Gruppe der Polyurethandi- und/oder -polyole, Polycarbonatdi- und/oderpolyole, Polyacrylatdi- und/oder -polyole, Polyesterdi- und/oder -polyole, sowie Polyetherdi- und/oder -polyole.

5. Verfahren nach Anspruch 4,
**dadurch gekennzeichnet, daß** das eingesetzte Di- und/oder Polyol ein Polyurethandi- und/oder -polyol und/oder ein Polycarbonatdi- und/oder -polyol ist.

6. Verfahren nach einem der Ansprüche 1 bis 5,
**dadurch gekennzeichnet, daß** das hydrophobe Aminoplastharz ein hydrophobes Melaminharz ist.

7. Verfahren nach Anspruch 6
**dadurch gekennzeichnet, daß** das hydrophobe Melaminharz, durch Veretherung eines Melamin-Formaldehyd-Kondensationsprodukts mit C3- bis C12-Alkoholen hergestellt ist.

8. Verfahren nach einem der Ansprüche 1 bis 7,
**dadurch gekennzeichnet, daß** das hydroxylgruppenhaltige Bindemittel im Basislack A eine wäßrige Dispersion eines Polymerisats ist, das ausgewählt ist aus der Gruppe der Polyacrylate, Polyurethane, Polyester, Polyether, Alkydharze und/oder Cellulosederivate.

9. Verfahren nach Anspruch 8,
**dadurch gekennzeichnet, daß** das hydroxylgruppenhaltige Bindemittel im Basislack A eines wäßrige Dispersion eines acrylierten Polyurethanharzes ist.

10. Verfahren nach einem der Ansprüche 1 bis 9,
**dadurch gekennzeichnet, daß** der wäßrige transparente Decklack B ausgewählt ist aus der Gruppe der wäßrigen Einkomponenten- und/oder Zweikomponenten-Klarlacke.

11. Verfahren nach Anspruch 10,
**dadurch gekennzeichnet, daß** der wäßrige transparente Decklack B ein Pulverslurry-Klarlack ist.

## Claims

1. A process for applying a multicoat finish to a substrate surface, comprising the following steps:
(1): applying an aqueous basecoat A to the substrate surface,
(2): forming a polymer film from the aqueous basecoat A applied in stage (1),
(3): applying an aqueous transparent topcoat B to the basecoat film obtained in stage (2), and finally
(4): baking the basecoat film and the topcoat film together,
wherein the aqueous basecoat A comprises at least one hydroxyl-containing binder in aqueous solution or dispersion and a stable aqueous dispersion, prepared with a hydroxyl-containing emulsifier, of a hydrophobicized amino resin.

2. The process as claimed in claim 1, wherein the hydroxyl-containing emulsifier is a diol and/or polyol.

3. The process as claimed in claim 2, wherein the hydroxyl-containing emulsifier is a diol and/or polyol having a molecular weight of at least 500 daltons.

4. The process as claimed in claim 2 or 3, wherein the diol and/or polyol is selected from the group consisting of polyurethanediols and/or -polyols, polycarbonatediols and/or -polyols, polyacrylatediols and/or -polyols, polyesterdiols and/or -polyols, and polyetherdiols and/or -polyols.

5. The process as claimed in claim 4, wherein the diol and/or polyol used is a polyurethanediol and/or -polyol and/or a polycarbonatediol and/or -polyol.

6. The process as claimed in any of claims 1 to 5, wherein the hydrophobic amino resin is a hydrophobic melamine resin.

7. The process as claimed in claim 6, wherein the hydrophobic melamine resin is prepared by etherifying a melamine-formaldehyde condensate with C3 to C12 alcohols.

8. The process as claimed in any of claims 1 to 7, wherein the hydroxyl-containing binder in the basecoat A is an aqueous dispersion of a polymer selected from the group consisting of polyacrylates, polyurethanes, polyesters, polyethers, alkyd resins and cellulose derivatives.

9. The process as claimed in claim 8, wherein the hydroxyl-containing binder in the basecoat A is an aqueous dispersion of an acrylated polyurethane resin.

10. The process as claimed in any of claims 1 to 9, wherein the aqueous transparent topcoat B is selected from the group consisting of aqueous one-component and two-component clearcoats.

11. The process as claimed in claim 10, wherein the aqueous transparent topcoat B is a powder slurry clearcoat.

## Revendications

1. Procédé d'application d'un revêtement multicouches sur une surface de substrat, comprenant les étapes suivantes :
(1) application d'une laque de base aqueuse A sur la surface du substrat,
(2) formation d'un film polymère à partir de la laque de base aqueuse A appliquée dans l'étape (1),
(3) application d'une laque de finition transparente aqueuse B sur la couche de laque de base obtenue selon l'étape (2) et finalement
(4) un recuit commun de la couche de laque de base et de la couche de laque de finition,
**caractérisé en ce que** la laque de base aqueuse A contient au moins un liant contenant des groupes hydroxyle en solution ou dispersion aqueuse et une dispersion aqueuse stable préparée avec un émulsifiant contenant des groupes hydroxyle, d'une résine amino rendue hydrophobe.

2. Procédé selon la revendication 1,
**caractérisé en ce que** l'émulsifiant contenant des groupes hydroxyle est un diol et/ou un polyol.

3. Procédé selon la revendication 2,
**caractérisé en ce que** l'émulsifiant contenant des groupes hydroxyle est un diol et/ou polyol avec une masse moléculaire d'au moins 500 daltons.

4. Procédé selon la revendication 2 ou 3,
**caractérisé en ce que** le diol et/ou polyol est choisi dans le groupe formé par les diols et/ou polyols de polyuréthane, les diols et/ou polyols de polycarbonate, les diols et/ou polyols de polyacrylate, les diols et/ou polyols de polyester, ainsi que les diols et/ou polyols de polyéther.

5. Procédé selon la revendication 4,
**caractérisé en ce que** le diol et/ou le polyol mis en oeuvre est un diol et/ou polyol de polyuréthane, et/ou un diol et/ou polyol de polycarbonate.

6. Procédé selon l'une quelconque des revendications 1 à 5,
**caractérisé en ce que** la résine amino hydrophobe est une résine mélamine hydrophobe.

7. Procédé selon la revendication 6,
**caractérisé en ce que** la résine mélamine hydrophobe est préparée par éthérification d'un produit de condensation mélamine/formaldéhyde avec des alcools en C₃ à C₁₂.

8. Procédé selon l'une quelconque des revendications 1 à 7,
**caractérisé en ce que** le liant contenant des groupes hydroxyle dans la laque de base A est une dispersion aqueuse d'un polymère qui est choisi dans le groupe des polyacrylates, polyuréthanes, polyesters, polyéthers, résines alkyde et/ou dérivés de cellulose.

9. Procédé selon la revendication 8,
**caractérisé en ce que** le liant contenant des groupes hydroxyle dans la laque de base A est une dispersion aqueuse d'une résine polyuréthane acrylée.

10. Procédé selon l'une quelconque des revendications 1 à 9,
**caractérisé en ce que** la laque de finition transparente aqueuse B est choisie dans le groupe des laques transparentes aqueuses monocomposantes et/ou bicomposantes.

11. Procédé selon la revendication 10,
**caractérisé en ce que** la laque de finition transparente aqueuse B est une laque transparente à suspension de poudre.
